# EUROPÄISCHE PATENTSCHRIFT

(11) **EP 1 602 739 B1**
(45) Veröffentlichungstag und Bekanntmachung des Hinweises auf die Patenterteilung: **15.08.2007**
(21) Anmeldenummer: 04450121.1
(22) Anmeldetag: 03.06.2004
(51) Int. Cl.: C22C 1/08, C22B 7/00

(54) **Verfahren zum Recyclen von Leichtmetallteilen**
Method for recycling of light metal parts
Procédé de recyclage de pièces en métal léger

(43) Veröffentlichungstag der Anmeldung: 07.12.2005
(73) Patentinhaber: Alulight International GmbH, 5282 Ranshofen (AT)
(72) Erfinder: Renger, Karin, Dr., 5280 Braunau (AT); Kretz, Richard, Dipl.-Ing., 5280 Braunau (AT)
(74) Vertreter: Neidl-Stippler, Cornelia

(56) Entgegenhaltungen:
- DE-C- 4 326 982
- US-A- 3 671 221
- US-A- 5 632 319
- US-A1- 2003 051 850
- M.F. ASHBY ET AL.: "Metal Foams: A Design Guide" 2000, , XP002294753 * Seite 6 - Seite 9 *

## Beschreibung

Die Erfindung betrifft ein Verfahren zum Recyclen von Gaseinschlüsse bzw. nicht-metallische Partikel aufweisenden Leichtmetallteilen.

Weiter hat die Erfindung eine Verwendung von Druckgussschrottmaterial sowie eine Verwendung von Spänen passivierender Metalle zum Gegenstand.

Eine effiziente Ausnutzung von Ressourcen wird heutzutage nicht nur aus Sicht eines Umweltschutzes propagiert, sondern ist auch aus betrieblich-wirtschaftlicher Sicht verstärkt geboten. Hohe Rohstoffpreise und Entsorgungskosten zwingen Produkterzeuger in vielen Bereichen dazu, im Rahmen einer Produktion anfallenden Abfall selbst weiterzuverwenden oder einem Recycling zuzuführen. Beispielsweise sehen sich Hersteller von Leichtmetallkomponenten der Anforderung gegenüber, große Abfallmengen aus Gießverfahren und spanabhebenden Formgebungsverfahren zweckmäßig zu nützen.

In optimaler Weise liefert eine rohstoff- und energiesparende Verwertung von Abfällen möglichst hochwertige Produkte in wenigen Verfahrensschritten. Dies gilt selbstverständlich auch in der Aufbereitung und Wiederverwertung bzw. im Recycling von Leichtmetallabfällen. Je nach Ursprung des Abfalls können Leichtmetallabfälle allerdings Gaseinschlüsse und/oder nicht-metallische Partikel aufweisen, was es erschwert, allenfalls unmöglich macht, derartige Abfälle ohne weiteres in einen Produktionsprozess zu integrieren.

Gaseinschlüsse aufweisende Leichtmetallteile bzw. -abfälle, welche beispielsweise bei Gießverfahren, insbesondere beim Druckgießen, in großen Mengen anfallen, sind auf Grund der genannten Gaseinschlüsse zur unmittelbaren Herstellung von hochwertigen Leichtmetallkomponenten nicht geeignet. Deswegen werden, um eine Wiederverwendung auch für Leichtmetallkomponenten hoher Güte zu ermöglichen, derartige Leichtmetallteile aufgeschmolzen und die Schmelze unter Überhitzung entgast, so dass nach Erstarrung der Schmelze dichtes Leichtmetall vorliegt, welches im Anschluss z.B. in einem Gießverfahren eingesetzt werden kann. Ein Verfahren unter Verwendung von recycletem Aluminium zur Aluminiumsdraumstellung ist aus der US 5632319 A bekannt.

Ebenso wie bei Gaseinschlüssen aufweisenden Leichtmetallteilen ist auch bei nicht-metallische Partikel aufweisenden Leichtmetallteilen wie Magnesiumspäne ein aufwändiges Reinigen des Materials erforderlich, ehe das Leichtmetallmaterial zur Herstellung von hochwertigen Bauteilen eingesetzt werden kann. Hier verfährt man so, dass das verunreinigte Material geschmolzen wird, die störenden Partikel aus der Schmelze entfernt werden und die Schmelze anschließend erstarren gelassen wird.
Bei hoher Reinheit kann ein so efialtenes Vormaterial nachfolgend zur Herstellung von Leichtmetallteilen hoher Güte eingesetzt werden.

Es ist nun zwar möglich, aus Gaseinschlüsse bzw. nicht-metallische Verunreinigungen aufweisenden Leichtmetallteilen hochwertige Vormaterialien für Leichtmetallteile herzustellen, jedoch sind hiefür aufwändige Reinigungsoperationen erforderlich.

Auf Grundlage dieser Gegebenheiten ist es ein Ziel der Erfindung, ein Verfahren zur Aufbereitung von Gaseinschlüsse bzw. nicht-metallische Partikel aufweisenden Leichtmetallteilen anzugeben, mit dem derartige Abfallprodukte in verfahrenstechnisch einfacher Weise in hochwertige Produkte überführt werden können, ohne dass es einer Reinigung des eingesetzten Materials bedarf.

Diese Aufgabe wird bei einem Verfahren der eingangs genannten Art dadurch gelöst, dass aus mindestens einem Gaseinschlüsse aufweisenden Leichtmetallteil und mindestens einem im Wesentlichen dichten, nicht-metallische Partikel aufweisenden Leichtmetallteil eine gashältige Metallschmelze erstellt wird und die Metallschmelze bei zumindest zeitweiligen Unterdruck unter Ausbildung eines Leichtmetallschaumkörpers erstarren gelassen wird.

Die mit der Erfindung erzielten Vorteile sind im Wesentlichen darin zu sehen, dass verunreinigte bzw. kontaminierte Leichtmetallteile in einem einfachen Prozess unmittelbar in leichtgewichtige Metallschaumkörper überführbar sind, ohne dass eine vorherige Reinigung der eingesetzten Leichtmetallteile erforderlich ist. Günstigerweise werden beim erfindungsgemäßen Verfahren sowohl Gaseinschlüsse aufweisende Leichtmetallteile als auch im Wesentlichen dichte, nicht-metallische Partikel eingesetzt, so dass gleichzeitig verschieden kontaminierte Leichtmetallteile bzw. Sorten von Leichtmetallabfällen wiederverwertet bzw. recyclet werden können. Die erhaltenen Metallschaumkörper eignen sich als energie- und schallabsorbierende Komponenten, zur Wärmedämmung oder als Verstärkungselemente im Automobilbau. Somit sind minderwertige Abfallprodukte erfindungsgemäß unmittelbar in vielseitig einsetzbare hochwertige Metallschaumkörper umwandelbar.

Hinsichtlich des Mechanismus einer Metallschaumbildung spielen, so wird vermutet, die durch die jeweiligen Leichtmetallteile in die Metallschmelze eingebrachten Gaseinschlüsse bzw. nicht-metallischen Partikel zusammen: Über die Gaseinschlüsse eines ersten Leichtmetallteils wird das für eine Metallschaumbildung notwendige Gas eingebracht, wobei beim Aufschmelzen des Leichtmetallteils die Gaseinschlüsse in ihrer Form erhalten bleiben; die in der Metallschmelze ebenfalls vorliegenden nicht-metallischen Partikel lagern sich aus energetischen Gründen an den Oberfläche der Gaseinschlüsse bzw. Gasblasen an, wodurch diese stabilisiert werden und ein Zusammenwachsen derselben unterbunden ist. Die nicht-metallischen Partikel erhöhen überdies die Viskosität der Metallschmelze und verringern dadurch eine Beweglichkeit der Gaseinschlüsse bzw. Gasblasen in der Metallschmelze. Damit verringert sich auch die Tendenz der Gaseinschlüsse an die Oberfläche der Schmelze aufzusteigen und dort aus dieser auszutreten. Anlegen von Unterdruck schließlich bewirkt ein Aufschäumen der gashältigen Metallschmelze unter Ausbildung eines Leichtmetallschaumkörpers.

Soweit ein Vergleich zu herkömmlichen Verfahren zur Herstellung von Metallschaumkörpern gezogen werden kann, zeichnet sich ein erfindungsgemäßes Verfahren dadurch aus, dass weder besondere Maßnahmen zum Einbringen eines Gases noch eine aufwändige getrennte Herstellung von Treibmittel- und Leichtmetall-Pulverkomponenten zwingend erforderlich sind, wie dies bei schmelzmetallurgischen bzw. pulvermetallurgischen Verfahren der Fall ist.

Grundsätzlich können bei einem Verfahren nach der Erfindung Leichtmetallteile aus verschiedenen Leichtmetallen eingesetzt werden. Günstig ist es jedoch, wenn Leichtmetallteile aus dem gleichen Metall bzw. der gleichen Legierung eingesetzt werden. Die Leichtmetalle schmelzen dann innerhalb eines engen Temperaturintervalls, was eine Verfahrensführung und - kontrolle vereinfacht.

Weiter ist es vorteilhaft, wenn als Gaseinschlüsse aufweisender Leichtmetallteil ein Druckgussschrottteil eingesetzt wird. Druckgussschrott, beispielsweise in Form so genannter Überläufe wie sie bei Druckgussverfahren anfallen, kann einen Anteil an Gaseinschlüssen von mehr als etwa 10 Volumsprozent aufweisen, was sich bezüglich einer hohen Einbringung von Gas in die Metallschmelze bewährt.

Dabei ist es besonders vorteilhaft, wenn der Druckgussschrottteil aus Magnesium oder einer Magnesiumlegierung besteht. Teile aus diesen Materialien passivieren an der Oberfläche, wobei sich Magnesiumpartikel bzw. -häute ausbilden. Werden solche Teile in der Folge in einem erfindungsgemäßen Verfahren eingesetzt, so können zusätzlich stabilisierende Magnesiumoxidpartikel eingebracht werden. Außerdem sind auch Gaseinschlüsse im Inneren gleichsam passiviert; dies trägt positiv zur Stabilität der Gaseinschlüsse bzw. Gasblasen in der Schmelze bei.

Als dichter Leichtmetallteil kann ebenfalls ein Teil aus Magnesium oder einer Magnesiumlegierung eingesetzt werden, so dass eine Stabilisierung von Gasblasen in der Metallschmelze vornehmlich über Magnesiumoxid-Partikel bewirkt wird.

Es ist von Vorteil, wenn die nicht-metallischen Partikel im Wesentlichen Oxid-Partikel sind, weil sich diese Partikel im Hinblick auf Reaktionen mit Leichtmetallschmelzen regelmäßig inert verhalten. Im Gegensatz zu beispielsweise Carbiden kann daher bei Vorliegen solcher Partikel in einem Einsatzmaterial davon ausgegangen werden, dass diese Partikel im gebildeten Metallschaumkörper nahezu unverändert vorliegen. Dadurch lassen sich auch Eigenschaften des gebildeten Leichtmetallschaumkörpers zuverlässig beeinflussen. So lässt sich auf dieser Grundlage ein Gehalt an nicht-metallischen Partikeln im erstellten Metallschaumkörper steuern: Ist ein Partikelgehalt im Einsatzmaterial bekannt, so braucht lediglich ein Gewichtsverhältnis von Gaseinschlüsse aufweisenden Leichtmetallteilen zu oxidische Partikel aufweisenden Leichtmetallteilen entsprechend dem gewünschten Partikelgehalt im Metallschaumkörper gewählt werden.

Im Zusammenhang mit den nicht-metallischen Partikeln hat es sich als vorteilhaft gezeigt, wenn diese eine durchschnittliche Größe von weniger als 200 µm aufweisen.

Bevorzugt wird eine Metallschmelze mit einem Volumsanteil an nicht-metallischen Partikeln von 2 bis 10 % erstellt. Ab Partikelgehalten von 2 % wird eine gute Stabilisierung von Gaseinschlüssen/Gasblasen in der Schmelze erreicht; bis zu Partikelgehalten von 10 % lässt sich die gashältige Metallschmelze durch Anlegen eines Unterdrucks leicht aufschäumen. Darüber hinaus erschwert eine zunehmende Viskosität ein Aufschäumen der Metallschmelze.

Die Metallschmelze wird bevorzugt aufgeschäumt und in einen Leichtmetallschaumkörper überführt, indem sie bei einem Unterdruck von 10 bis 400 mbar, insbesondere 50 bis 200 mbar, erstarren gelassen wird.

Es ist auch möglich, über die Schmelzenoberfläche durch Gasdruckbeaufschlagung zusätzlich Gas in die Metallschmelze einzubringen, um ein nachfolgendes Aufschäumen zu unterstützen. Verfahrenstechnisch und apparativ besonders einfach ist es jedoch, wenn die Metallschmelze bei Atmosphärendruck erstellt wird. In diesem Fall wird während des gesamten Verfahrens ein Atmosphärendruck nicht überschritten.

Nach Erstellung soll die Metallschmelze nicht mehr als 20°C überhitzt werden. Mit zunehmender Temperatur sinkt die Viskosität einer Metallschmelze, was auch eine Beweglichkeit von Gasblasen und daher ein Ausgasen grundsätzlich begünstigt. Es ist deshalb zweckmäßig, eine Überhitzung der Metallschmelze kontrolliert gering zu halten.

Bevorzugt ist es, wenn der Unterdruck bei Erreichen einer Temperatur im Bereich von 5°C oberhalb bis 5°C unterhalb der Erstarrungstemperatur bzw. des Erstarrungsintervalls der Metallschmelze angelegt wird. In diesem Temperaturbereich weist die Flüssigphase des Metalls eine hohe Viskosität auf, was sich im Hinblick auf eine strukturelle Stabilität des gebildeten Metallschaums als günstig erweist.

Im Hinblick auf eine strukturelle Stabilität des gebildeten Metallschaums ist es ebenfalls bevorzugt, wenn der Unterdruck, der ein Aufschäumen der Metallschmelze bewirkt, bis zur vollständigen Erstarrung der Metallschmelze aufrecht erhalten wird. Gleichzeitig kann die Metallschmelze während der Erstarrung gekühlt werden, um freiwerdende Erstarrungswärme abzuführen und eine innere Struktur des gebildeten Leichtmetallschaumkörpers gleichsam einzufrieren.

Um einen Leichtmetallschaumkörper mit einer bestimmten Form auszubilden, kann vor Anlegen von Unterdruck die Metallschmelze in ein dem Leichtmetallschaumkörper formgebendes Gefäß überführt werden.

In einer weiteren Variante der Erfindung können während der Bildung des Leichtmetallschaumkörpers Teile desselben bzw. Metallschaum mit einem metallischen Körper in Berührung gebracht werden. In diesem Fall wird der gebildete Metallschaum in einem Verfahrensschritt sogleich mit einem metallischen Körper durch eine metallische Bindung verbunden. Dies ermöglicht eine außerordentlich einfache Herstellung von Verbundteilen.

In einer weiteren Variante der Erfindung wird die Metallschmelze in einem im Wesentlichen geschlossenen und eine räumliche Ausdehnung des sich bildenden Leichtmetallschaumkörpers begrenzenden Behältnis erstarren gelassen. In diesem Fall ist einerseits das Volumen des fertigen Leichtmetallschaumkörpers vorgegeben; da andererseits auch die in das Behältnis eingebrachte Masse gewählt werden kann bzw. feststeht, ist folglich auch die Dichte festgelegt. Anders ausgedrückt: Diese Variante der Erfindung ermöglicht eine gezielte Einstellung der Dichte des erstellten Leichtmetallschaumkörpers.

Ein erfindungsgemäßes Verfahren kann zur Herstellung mehrerer gleicher Leichtmetallschaumkörper eingesetzt werden, wenn die Metallschmelze portionenweise in das Behältnis eingebracht und in diesem erstarren gelassen wird.

Besonders bewährt hat es sich, Druckgussschrott zur Herstellung von Metallschaumkörpern einzusetzen. Als zweite Leichtmetallkomponente können Späne passivierender Metalle herangezogen werden. Solche Späne, welche beispielsweise bei Drehbearbeitungen von Aluminium- oder Magnesiumwerkstücken in großen Mengen als Abfallprodukt anfallen, sind insofern von besonderem Vorteil, als dass sie sich aufgrund einer passivierten, oxidische Partikel aufweisenden Oberfläche bestens zur Einbringung von stabilisierenden Partikel eignen. Außerdem weisen diese Spänen bei geringem Volumen eine große Oberfläche auf, so dass bereits eine geringe Beimengung an derartigen Spänen ausreichend ist, um ein Aufschäumen einer Metallschmelze aus Druckgussschrott und eine Ausbildung eines stabilien Metallschaums zu ermöglichen.

Im Folgenden ist die Erfindung anhand von Beispielen noch weitergehend dargelegt.

Es zeigen
Figur 1: Einen aufgeschnittenen Magnesiumschaumkörper;
Figur 2: Ein Schliffbild des Magnesiumschaumkörpers aus Figur 1 mit etwa 25-facher Vergrößerung;
Figur 3: Ein Schliffbild des Magnesiumschaumkörpers aus Figur 1 mit etwa 90-facher Vergrößerung;
Figur 4: Spannungs-/Stauchungsdiagramme von Metallschaumkörpern mit einer Dichte von a) 0.56 gcm⁻³, b) 0.41 gcm⁻³, c) 0.36 gcm⁻³ und d) 0.23 gcm⁻³;
Figur 5a: Metallschaumkörper aus Legierung AZ91, wobei Unterdruck bei Erreichen von 580°C angelegt wurde;
Figur 5b: Metallschaumkörper aus Legierung AZ91, wobei Unterdruck bei Erreichen von 600°C angelegt wurde;
Figur 5c: Metallschaumkörper aus Legierung AZ91, wobei Unterdruck bei Erreichen von 620°C angelegt wurde;
Figur 6a: Einen Magnesiumschaumkörper, der in einem offenen Gefäß hergestellt wurde;
Figur 6b: Einen Magnesiumschaumkörper, der in einem geschlossenen Gefäß hergestellt wurde;
Figur 7: Eine Vorrichtung zum Ausschäumen von Hohlkörpern;
Figur 8: Einen Verbundteil bestehend aus einem Aluminiumrohr mit einem Magnesiumschaumkern.

In einem erfindungsgemäßen Recyclingverfahren wurden Druckgussschrottteile aus Magnesiumlegierungen AZ91 und AM50 zur Herstellung von Leichtmetallschaumkörpern eingesetzt. Die Druckgussschrottteile wiesen Poreneinschlüsse mit einem Volumenanteil von jeweils ungefähr 20 % auf. Die chemische Zusammensetzung der eingesetzten Schrottteile ist in Tabelle 1 angegeben.

**Tabelle 1: Chemische Zusammensetzung von Legierungen AZ91 und AM50**

| Legierung | Al [%] | Be [%] | Cu [%] | Fe [%] | Mn [%] | Ni [%] | Si [%] | Zn [%] |
|---|---|---|---|---|---|---|---|---|
| AZ91 | 9,2 | < 0,001 | < 0,005 | 0,007 | 0,19 | < 0,001 | 0,03 | 0,75 |
| AM50 | 4,7 | < 0,001 | < 0,005 | 0,002 | 0,29 | < 0,001 | 0,02 | < 0,01 |

Druckgussschrottteile aus AZ91 bzw. AM50 wurden zusammen mit Magnesiumspänen aus der jeweils gleichen Legierung im Gewichtsverhältnis
Druckgussschrottteile : Späne = 7 : 1 in einem offenen Tiegel unter Atmosphärendruck aufgeschmolzen. Die so erstellten Metallschmelzen wurden jeweils in Stahlformen überführt. Anschließend wurden die befüllten Stahltiegel in eine Unterdruckkammer gestellt und bei einer Temperatur von 600°C (AZ91) bzw. 630°C (AM50) einem Unterdruck von 80 mbar ausgesetzt, wodurch die Metallschmelzen aufschäumten und sich Leichtmetallschaumkörper ausbildeten.

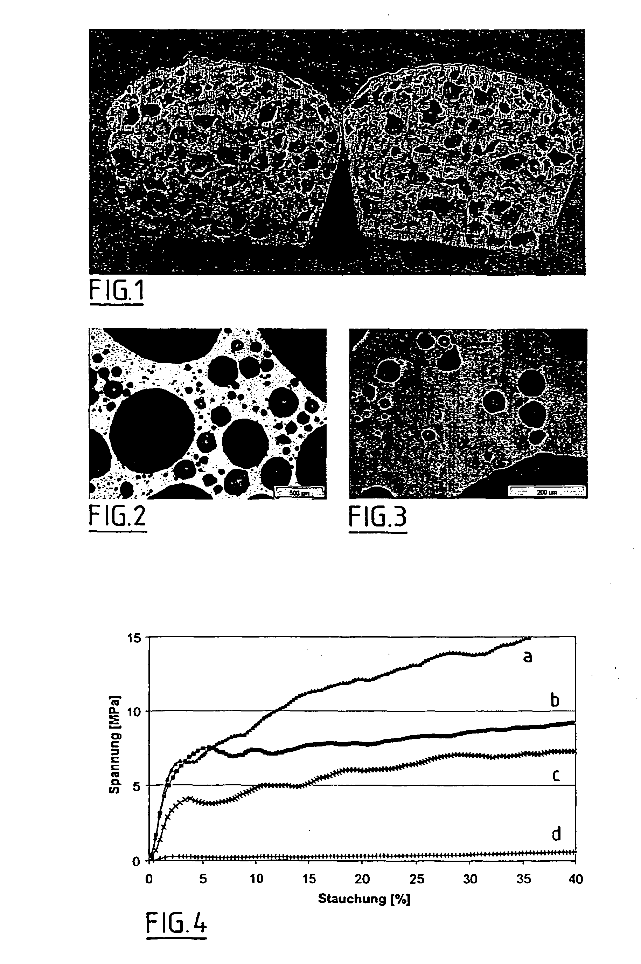

Ein so erstellter Leichtmetallschaumkörper ist im Querschnitt in Figur 1 gezeigt. Wie ersichtlich, weist der Leichtmetallschaumkörper eine Vielzahl von Poren und eine dichte, äußere Oberfläche auf. Neben den aus Figur 1 offensichtlichen Poren, welche einen Durchmesser von einigen Millimeter haben, sind weitere Poren mit geringerem Durchmesser vorhanden, wie aus den Schliffbildem Figur 2 und Figur 3 ersichtlich. Die nicht-metallischen Partikel wiesen eine durchschnittliche Größe von weniger als 200 µm auf.

Die in den Figuren 1 bis 3 näher gezeigte Porenstruktur resultiert in einem Energieabsorptionsverhalten, welches die aus Recyclingmaterial erstellten Leichtmetallschaumkörper für viele Applikationen im Fahrzeugbau einsetzbar macht.

In Figur 4 sind Spannungs-/Stauchungsdiagramme im Druckversuch an Quadern (5 × 5×3 cm³) für Leichtmetallschaumkörper aus Legierung AZ91 und verschiedene Dichten dargestellt. Diese Stauchkurven für Quader mit einer Dichte von a) 0.56 gcm⁻³, b) 0.41 gcm⁻³, c) 0.36 gcm⁻³ und d) 0.23 gcm⁻³ belegen, dass Recycling-Leichtmetallschaumkörper im Stauchversuch nach einem kurzen linearen Anstieg ein ausgeprägtes Plateau zeigen. In diesem Plateaubereichen, der sogenannten Umformspannung, sind die Leichtmetallschaumkörper als Energieabsorber wirksam. Die bei Recycling-Leichtmetallschaumkörpern erzielten Umformspannungen liegen im Bereich jener Leichtmetallschaumkörper, die auf herkömmlichen Weg, z.B. pulvermetallurgisch oder schmelzmetallurgisch, hergestellt sind.

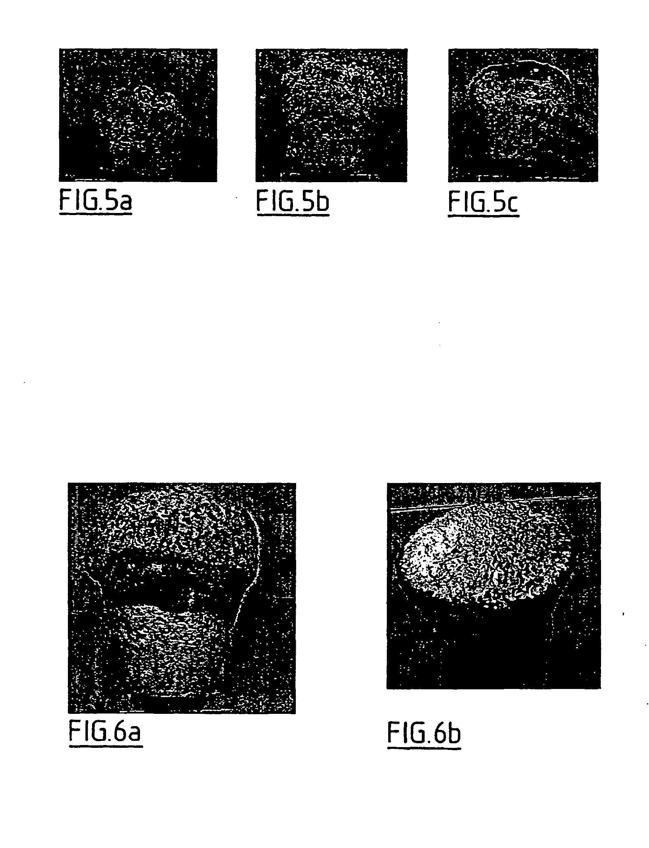

In den Figuren 5a bis 5c sind Auswirkungen einer Temperatur beim Beginn des Unterdrucks auf die Form eines Leichtmetallschaumkörpers aus AZ91 Legierung gezeigt. Figur 5a und 5b zeigen im Vergleich, dass bei 580°C die Schaumbildung teilweise unterdrückt ist, was auf eine zu hohe Viskosität des aufzuschäumenden Materials bei dieser Temperatur zurückzuführen ist. Bei 600°C, was in etwa dem Schmelzpunkt von AZ91 entspricht, ist ein Schaumbildungsprozess in Bezug auf eine vollständige Expansion des Schaumkörpers optimiert. Höhere Temperaturen wie 620°C (Figur 5c) resultieren in einer Abnahme der Viskosität der Metallschmelze. In der Folge kann der gebildete Metallschaumkörper teilweise kollabieren, weil eine Wandstruktur des Metallschaums nicht genügend stabil ist.

Neben einer der Wahl einer Aufschäumtemperatur bzw. einer Temperatur, bei welcher Unterdruck erstmalig angelegt wird, fördern auch gezielte Abkühlbedingungen eine homogene Ausbildung von Leichtmetallschaumkörpern: Vorteilhaft ist eine allseitig gleichmäßige Kühlung, welche durch Isolation des Behältnisses, in welchem ein Aufschäumen durchgeführt wird, erreichbar ist.

Figuren 6a und 6b stellen Ausbildungen von Leichtschaumkörpem bei gleichen Bedingungen, insbesondere gleichen Temperaturen, Unterdrücken und gleicher eingesetzter Masse der Metallschmelzen, in einem offen Behältnis (Figur 6a) und in einem abgeschlossenen Behältnis (Figur 6b) gegenüber. Ist ein Behältnis offen, so kann sich gebildeter Metallschaum ungehindert ausdehnen und es entsteht ein Leichtmetallschaumkörper wie in Figur 6a gezeigt. Ist hingegen ein Behältnis derart abgeschlossen, dass zwar ein Unterdruck in diesem erzeugt werden kann, eine Ausdehnung des gebildeten Metallschaumkörpers aber begrenzt ist, so bestimmt eine Form des Behältnisses jene des Metallschaumkörpers. Solchenfalls kann ein poröser Leichtmetallschaumkörper gewünschter Form und mit einer im Wesentlichen dichten Oberfläche erhalten werden.

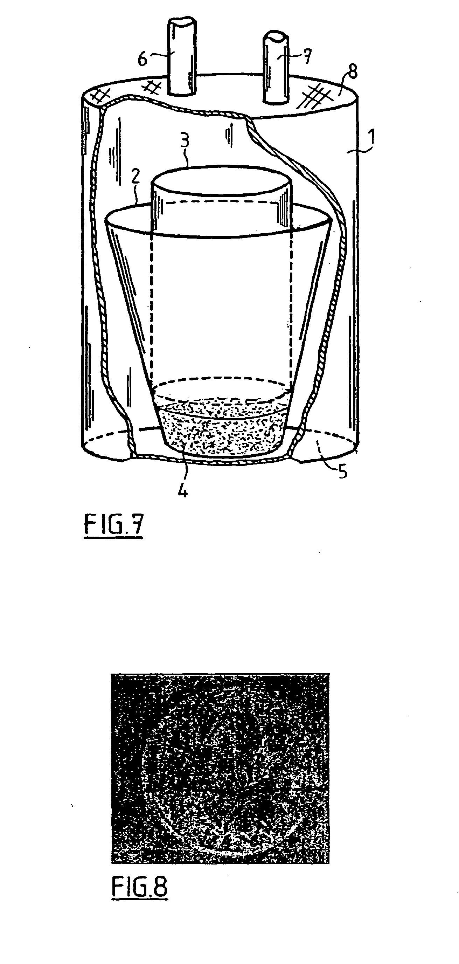

Anhand der Figuren 7 und 8 ist näher erläutert, wie ein erfindungsgemäßes Verfahren zur Herstellung von Verbundteilen eingesetzt werden kann. Figur 7 zeigt eine Unterdruckkammer 1 mit einem Gaseinlass 6 und einem Gasauslass 7, welche auf einem Deckel 8 der Unterdruckkammer 1 angebracht sind. Deckel 8 ist von einer Seitenwand 5 des Unterdruckkammer 1 abnehmbar, so dass eine Stahlform 2 in die Unterdruckkammer 1 einbringbar ist. Nach Einbringen der Stahlform 2 dient diese der Aufnahme einer gashältigen Metallschmelze 4. Es versteht sich, dass es ebenso möglich ist, zuerst die Metallschmelze 4 in den Stahlform 2 und anschließend die Stahlform 2 in die Unterdruckkammer 1 zu stellen.

Neben der Stahlform 2 wird in die Unterdruckkammer 1 ein Hohlkörper 3 eingebracht. Der Hohlkörper **3** wird dabei so platziert, dass der aus der Metallschmelze 4 gebildete Metallschaum diesen kontaktieren kann. Dies kann gemäß dem im Figur 7 dargestellten Beispiel in der Weise erfolgen, dass ein Hohlkörper 3 in Form eines Rohres in eine konisch geformte Stahlform 2 knapp oberhalb einer Schmelzenoberfläche angestellt wird.

Der Hohlkörper 3 kann aus einem beliebigen Metall bzw. Legierung bestehen. Beispielsweise eigenen sich in Kombination mit Leichtmetallschaumkörpern aus Magnesium oder Magnesiumlegierungen Stahl- oder Aluminiumprofile. Besonders günstig ist, wenn der auszuschäumende Hohlkörper 3 aus einem Metall oder einer Legierung besteht, welche einen Schmelzpunkt/ein Schmelzintervall aufweist, welcher/welches in etwa im Bereich der Metallschmelze liegt. Dann bewirkt Kontakt mit dem auf bzw. knapp unterhalb der Schmelztemperatur befindlichen Metallschaum ein Anschmelzen des Hohlkörpers 3 an der Kontaktfläche, was eine feste metallische Bindung von Leichtmetallschaum und Hohlkörper 3 fördert. Von Vorteil ist es auch, die Oberfläche des eingesetzten Hohlkörpers 3 im gewünschten Kontaktbereich vorzubehandeln, beispielsweise passivierende Schichten zu entfemen, um eine möglichst vollflächige metallische Bindung zu erreichen.

Figur 8 zeigt einen Schnitt durch ein gemäß der Anordnung nach Figur 7 erstelltes Verbundteil. Ein äußerer Bereich des Verbundteiles wird durch das eingesetzte Hohlprofil 3 gebildet und innerer Bereich aus Leichtmetallschaum.

Es versteht sich für den Fachmann, dass nicht nur eine Ausschäumen von Hohlprofilen möglich ist, sondern ebenso und mit gleicher Güte erstellter Verbundteile auch ein Umschäumen von metallischen Körpern und Kombinationen Ausschäumen/Umschäumen möglich sind.

## Patentansprüche

1. Verfahren zum Recyclen von Gaseinschlüsse bzw. nicht-metallische Partikel aufweisenden Leichtmetallteilen, **dadurch gekennzeichnet, dass** aus mindestens einem Gaseinschlüsse aufweisenden Leichtmetallteil und mindestens einem im Wesentlichen dichten, nicht-metallische Partikel aufweisenden Leichtmetallteil eine gashältige Metallschmelze erstellt wird und die Metallschmelze bei zumindest zeitweiligen Unterdruck unter Ausbildung eines Leichtmetallschaumkörpers erstarren gelassen wird.

2. Verfahren nach Anspruch 1, **dadurch gekennzeichnet, dass** Leichtmetallteile aus dem gleichen Metall bzw. der gleichen Legierung eingesetzt werden.

3. Verfahren nach einem der Ansprüche 1 oder 2, **dadurch gekennzeichnet, dass** als Gaseinschlüsse aufweisender Leichtmetallteil ein Druckgussschrottteil eingesetzt wird.

4. Verfahren nach Anspruch 3, **dadurch gekennzeichnet, dass** der Druckgussschrottteil aus Magnesium oder einer Magnesiumlegierung besteht.

5. Verfahren nach Anspruch 4, **dadurch gekennzeichnet, dass** als im Wesentlichen dichter Leichtmetallteil ein Teil aus Magnesium oder einer Magnesiumlegierung eingesetzt wird.

6. Verfahren nach einem der Ansprüche 1 bis 5, **dadurch gekennzeichnet, dass** die nicht-metallischen Partikel im Wesentlichen Oxid-Partikel sind.

7. Verfahren nach einem der Ansprüche 1 bis 6, **dadurch gekennzeichnet, dass** die nicht-metallischen Partikel eine durchschnittliche Größe von weniger als 200 µm aufweisen.

8. Verfahren nach einem der Ansprüche 1 bis 7, **dadurch gekennzeichnet, dass** eine Metallschmelze mit einem Volumsanteil an nicht-metallischen Partikeln von 2 bis 10 % erstellt wird.

9. Verfahren nach einem der Ansprüche 1 bis 8, **dadurch gekennzeichnet, dass** die Metallschmelze bei einem Unterdruck von 10 bis 400 mbar, insbesondere 50 bis 200 mbar, erstarren gelassen wird.

10. Verfahren nach einem der Ansprüche 1 bis 9, **dadurch gekennzeichnet, dass** die Metallschmelze bei Atmosphärendruck erstellt wird.

11. Verfahren nach einem der Ansprüche 1 bis 10, **dadurch gekennzeichnet, dass** die Metallschmelze nicht mehr als 20°C überhitzt wird.

12. Verfahren nach einem der Ansprüche 1 bis 11, **dadurch gekennzeichnet, dass** der Unterdruck bei Erreichen einer Temperatur im Bereich von 5°C oberhalb bis 5°C unterhalb der Erstarrungstemperatur bzw. des Erstarrungsintervalls der Metallschmelze angelegt wird.

13. Verfahren nach einem der Ansprüche 1 bis 12, **dadurch gekennzeichnet, dass** der Unterdruck bis zur vollständigen Erstarrung der Metallschmelze aufrecht erhalten wird.

14. Verfahren nach einem der Ansprüche 1 bis 13, **dadurch gekennzeichnet, dass** die Metallschmelze während der Erstarrung gekühlt wird.

15. Verfahren nach einem der Ansprüche 1 bis 14, **dadurch gekennzeichnet, dass** vor Anlegen von Unterdruck die Metallschmelze in ein dem Leichtmetallschaumkörper formgebendes Gefäß überführt wird.

16. Verfahren nach einem der Ansprüche 1 bis 15, **dadurch gekennzeichnet, dass** während der Bildung des Leichtmetallschaumkörpers ein Teil desselben bzw. Metallschaum mit einem metallischen Körper in Berührung gebracht wird.

17. Verfahren nach einem der Ansprüche 1 bis 16, **dadurch gekennzeichnet, dass** die Metallschmelze in einem im Wesentlichen geschlossenen und eine räumliche Ausdehnung des sich bildenden Leichtmetallschaumkörpers begrenzenden Behältnis erstarren gelassen wird.

18. Verfahren nach einem der Anspruch 17, **dadurch gekennzeichnet, dass** die Metallschmelze portionenweise in das Behältnis eingebracht und in diesem erstarren gelassen wird.

19. Verwendung von Druckgussschrott zur Herstellung von Metallschaumkörpern gemäß einem Verfahren nach einen des vorangehenden Ansprüche.

20. Verwendung von Spänen passivierender Metalle zur Herstellung von Metallschaumkörpern gemäß einen Verfahren nach einen der vorangehenden Ansprüche.

## Claims

1. Process for recycling light metal parts with gas inclusions or non-metallic particles, **characterized** therein that from at least one light metal part with gas inclusions and at least one light metal part with essentially dense, non-metallic particles, a gas-containing metal melt can be produced and the metal melt can be allowed to solidify at vacuum for at least some time under formation of a light metal foam body.

2. Process according to claim 1, **characterized** therein that light metal parts of the same metal or the same alloy are used.

3. Process according to claims 1 or 2, **characterized** therein that a die casting scrap part is used as light metal part with gas inclusions.

4. Process according to claim 3, **characterized** therein that the die casting scrap part is made of magnesium or a magnesium alloy.

5. Process according to claim 4, **characterized** therein that as part made of magnesium or of magnesium alloy is used as essentially dense light metal part.

6. Process according to one of the claims 1 to 5, **characterized** therein that the non-metallic particles are essentially oxide particles.

7. Process according to one of the claims 1 to 6, **characterized** therein that the none-metallic particles have an average size of under 200 µm.

8. Process according to one of the claims 1 to 7, **characterized** therein that a metal melt having 2 - 10 vol.% of non-metallic particles is produced.

9. Process according to one of the claims 1 to 8, **characterized** therein that the metal melt is allowed to solidify at a vacuum of 10 to 400 mbar, particularly 50 to 200 mbar.

10. Process according to one of the claims 1 to 9, **characterized** therein that the metal melt is produced at atmospheric pressure.

11. Process according to one of the claims 1 to 10, **characterized** therein that the metal melt is overheated by not more than 20°C.

12. Process according to one of the claims 1 to 11, **characterized** therein that the vacuum is applied on reaching a temperature in the range of 5°C above to 5°C below the solidification temperature or the solidification range of the metal melt.

13. Process according to one of the claims 1 to 12, **characterized** therein that the vacuum is maintained till complete solidification of the metal melt.

14. Process according to one of the claims 1 to 13, **characterized** therein that the metal melt is cooled during solidification.

15. Process according to one of the claims 1 to 14, **characterized** therein that before applying vacuum the metal melt is transferred into a container forming the light metal foam body.

16. Process according to any of the claims 1 to 15, **characterized** therein that during formation of the light metal foam body, a part of the same or metal foam is brought in contact with a metal body.

17. Process according to one of the claims 1 to 16, **characterized** therein that the metal melt is allowed to solidify in an essentially closed container that limits spatial expansion of the forming light metal foam body.

18. Process according to claim 17, **characterized** therein that the metal melt is introduced portion-wise into the container and allowed to solidify in it.

19. Use of die casting scrap for producing metal foam bodies according to a process according to any one of the preceding claims.

20. Use of chips of passivating metals for producing metal foam bodies according to a process according to any one of the preceding claims.

## Revendications

1. Procédé pour le recyclage des pièces de métal léger, qui présentent des inclusions gazeuses, respectivement des particules non métalliques, **caractérisé en ce que** d'au moins une pièce de métal léger à des inclusions gazeuses et au moins une pièce de métal léger en essence dense, qui présente des particules non métalliques, est produite une masse fondue métallique à teneur gazeuse et que la masse fondue métallique est laissée se solidifier sous pression réduite au moins temporaire, en résultant un corps de métal un peu écumeux.

2. Procédé selon la revendication 1, **caractérisé en ce qu'**on utilise des pièces de métal léger du même métal, respectivement, du même alliage.

3. Procédé selon l'une des revendications 1 ou 2, **caractérisé en ce qu'**on utilise une pièce de métal vieux formée par coulée sous pression comme pièce de métal léger à des inclusions gazeuses.

4. Procédé selon la revendication 3, **caractérisé en ce que**, la pièce de métal vieux formée par coulée sous pression consiste en magnésium ou un alliage de magnésium.

5. Procédé selon la revendication 4, **caractérisé en ce qu'**on utilise comme pièce en essence dense de métal léger une pièce de magnésium ou d'un alliage de magnésium.

6. Procédé selon l'une des revendications 1 à 5, **caractérisé en ce que** les particules non métalliques sont en essence des particules d'oxyde.

7. Procédé selon l'une des revendications 1 à 6, **caractérisé en ce que**, les particules non métalliques présentent une dimension moyenne plus petite de 200 µm.

8. Procédé selon l'une des revendications 1 à 7, **caractérisé en ce qu'**on produit une masse fondue métallique ayant un pourcentage en volume des particules non métalliques de 2 à 10 %.

9. Procédé selon l'une des revendications 1 à 8, **caractérisé en ce que** la masse fondue métallique est laissée se solidifier à une pression réduite de 10 à 400 mbars, spécialement de 50 à 200 mbars.

10. Procédé selon l'une des revendications 1 à 9, **caractérisé en ce que** la masse fondue métallique est produite à la pression atmosphérique.

11. Procédé selon l'une des revendications 1 à 10, **caractérisé en ce que**, la masse fondue métallique n'est pas surchauffée plus de 20 °C.

12. Procédé selon l'une des revendications 1 à 11, **caractérisé en ce que**, la pression réduite est appliquée à l'atteint d'une température dans le domaine situé entre 5 °C au-dessus jusqu'à 5 °C au-dessous de la température de solidification, respectivement, de l'intervalle de solidification de la masse fondue métallique.

13. Procédé selon l'une des revendications 1 à 12, **caractérisé en ce que** la pression réduite est maintenue jusqu'à la solidification complète de la masse fondue métallique.

14. Procédé selon l'une des revendications 1 à 13, **caractérisé en ce que** la masse fondue métallique est refroidie pendant sa solidification.

15. Procédé selon l'une des revendications 1 à 14, **caractérisé en ce qu'**avant de la production de la pression réduite la masse fondue métallique est transférée dans un récipient, qui donne la forme au corps de métal un peu écumeux.

16. Procédé selon l'une des revendications 1 à 15, **caractérisé en ce que** pendant la formation du corps de métal un peu écumeux une partie de celui, respectivement, l'écume métallique est amenée en contact avec un corps métallique.

17. Procédé selon l'une des revendications 1 à 16, **caractérisé en ce que**, la masse fondue métallique est laissée se solidifier dans une enceinte en essence fermée et qui limite la dilatation en volume du corps écumeux de métal léger, qui se forme.

18. Procédé selon la revendication 17, **caractérisé en ce que** la masse fondue métallique est amenée portionnée dans cette enceinte et laissée se solidifier.

19. Utilisation de métal vieux de coulée sous pression pour la production du corps d'écume métallique selon un procédé de l'une des revendications antérieures.

20. Utilisation de copeaux métalliques pour la production de corps d'écume métallique selon un procédé de l'une des revendications antérieures.
